# EUROPÄISCHE PATENTSCHRIFT

(11) **EP 3 187 326 B1**
(45) Veröffentlichungstag und Bekanntmachung des Hinweises auf die Patenterteilung: **10.08.2022**
(21) Anmeldenummer: 17154301.0
(22) Anmeldetag: 18.08.2006
(51) Int. Cl.: B29C 49/06, B29C 49/36, B29C 49/78, B29C 49/42

(54) **VERFAHREN UND VORRICHTUNG ZUR STEUERUNG UND REGELUNG EINER HOHLKÖRPERHERSTELLUNGSEINHEIT**
METHOD AND DEVICE FOR CONTROLLING AND REGULATING A UNIT FOR PRODUCING HOLLOW BODIES
PROCÉDÉ ET DISPOSITIF DE COMMANDE ET RÉGLAGE D'UNE UNITÉ DE FABRICATION DE CORPS CREUX

(30) Priorität: 08.09.2005 DE 102005042926
(43) Veröffentlichungstag der Anmeldung: 05.07.2017
(62) Teilanmeldung aus: 14172519.2
(73) Patentinhaber: Krones AG, 93073 Neutraubling (DE)
(72) Erfinder: Voth, Klaus, 93073 Neutraubling (DE); Geltinger, Florian, 93073 Neutraubling (DE); Blochmann, Erik, 93073 Neutraubling (DE); Schmid, Florian, 93073 Neutraubling (DE); Brunner, Andreas, 93073 Neutraubling (DE)
(74) Vertreter: Grünecker Patent- und Rechtsanwälte PartG mbB

(56) Entgegenhaltungen:
- EP-A2- 1 306 195
- DE-C2- 3 991 547
- JP-A- 2002 317 770
- US-A1- 2003 183 966
- US-A1- 2004 173 949

## Beschreibung

Die Erfindung betrifft ein Verfahren zur Steuerung und Regelung einer Hohlkörperherstellungseinheit gemäß dem Oberbegriff des Anspruchs 1 und eine Vorrichtung zum Herstellen von Hohlkörpern nach dem Oberbegriff von Anspruch 3.

Solche Hohlkörperherstellungseinheiten werden in verschiedenen Industriezweigen eingesetzt, so z. B. in der Glas- bzw. in der Kunststoffindustrie. In der Glasindustrie werden damit z. B. Glasflaschen hergestellt. In der Kunststoffindustrie finden solche Einheiten Verwendung in der Herstellung von Hohlkörpern, insbesondere von Behältern wie z. B. Flaschen. Vorher erwärmte Flaschenrohlinge werden in Formen gegeben, wo sie mit Druckluft beaufschlagt werden und dadurch ihre endgültige Gestalt erhalten. Diese Maschinen weisen immer Steuereinrichtungen und manchmal auch Regeleinrichtungen auf, um eine möglichst optimale Behälterqualität bei möglichst hohen Ausstoßraten zu gewährleisten.

Gemäß dem Stand der Technik sind Hohlkörperherstellungseinheiten mit Steuereinheiten bekannt, wobei die Steuereinheit nur für die Steuerung der Hohlkörperherstellungsmaschine zuständig ist. Die Kompressoren, die die Druckluft zur Herstellung der Hohlkörper bereitstellen, laufen mit konstanter Leistung, wobei es unerheblich ist, ob ein Behälter mit einem Maximaldruck (z. B. 40 bar) oder mit einem geringeren Druck (z. B. 32 bar) hergestellt werden soll. Die Druckregelung findet nicht über den Kompressor, sondern über die Druckreduktion in der Hohlkörperherstellungsmaschine statt.

Weiterhin sind aus dem Stand der Technik Hohlkörperherstellungseinheiten bekannt, bei denen sowohl die Hohlkörperherstellungsmaschine als auch der Kompressor jeweils eine eigene Steuereinheit besitzen. Wird die Behälterproduktion in der Hohlkörperherstellungsmaschine umgestellt, so wird die Steuereinheit dieser und die Steuereinheit des Kompressors getrennt voneinander umgestellt.

Die JP 2002 317770 A beschreibt eine Produktionsanlage mit mehreren Blasmaschinen und Kompressoren, die je nach benötigter Druckluftversorgung der aktivierten Blasmaschinen gezielt einzelne oder mehrere Kompressoren zuschaltet. Beispielsweise kann ein Einschaltsignal für eine Blasmaschine dazu benutzt werden, einen dazu passend ausgewählten Kompressor zu betreiben. Die Auslastung der Kompressoren und/oder deren Ausgangsdruck werden überwacht, um gegebenenfalls deren Ist-Leistung anzupassen und/oder Kompressoren zuzuschalten bzw. wegzuschalten. Es werden zu diesem Zweck also Istwerte der Kompressoren mit Sollwerten verglichen. Auch können an der Blasmaschine verschiedene Betriebsparameter überwacht werden und deren Istwerte für die Ansteuerung der Antriebsmotoren der Kompressoren verwendet werden. Die Lehre aus JP2002317770A entspricht den Oberbegriffen der unabhängigen Ansprüchen.

Die US 2003/0183966 A1 betrifft die Herstellung medizinischer Ballonkatheter oder dergleichen. Bei einer ersten Ausführungsform werden die Ballonkatheter aus einem Schlauch innerhalb einer Blasform mittels Druckluft aufgeblasen. Bei einer zweiten Ausführungsform werden die Ballons ohne Blasform lediglich durch Einleiten eines inkompressiblen Mediums unter Überdruck hergestellt. Nur für diese Ausführungsform ist eine Verbindung zwischen einer Steuereinheit und einer Pumpe für das inkompressible Medium beschrieben, Schließlich ist der Blasdruck hierbei entscheidend für die letztendlich entstehende Ballonform, da eine umschließende Blasform fehlt.

Ein Problem bei diesen Vorrichtungen ist es, dass der Arbeitsaufwand bei Produktionsumstellungen sehr hoch ist, da mehrere Steuereinrichtungen betätigt werden müssen. Es ist vor allem dann ein Problem, wenn mehrere Behälterherstellungsmaschinen und mehrere Kompressoren vorhanden sind, die parallel umgestellt werden müssen. Dies kann z.B. dann der Fall sein, wenn an eine Behälterherstellungsmaschine mehrere Kompressoren angeschlossen sind, wenn ein Kompressor mehrere Behälterherstellungsmaschinen oder wenn ein Block mehrerer Kompressoren einen Block mit mehreren Behälterherstellungsmaschinen versorgt.

Es ist deshalb Aufgabe der vorliegenden Erfindung, ein Verfahren und eine Vorrichtung bereitzustellen, mit dem, bzw. mit der es möglich ist, in einfacher Weise eine Produktionsumstellung in Hohlkörperherstellungseinheiten vorzunehmen. Zudem ist es Aufgabe der Erfindung, ein effizienteres und einfacheres Hohlkörperherstellungsverfahren bzw. eine einfachere und effizientere Vorrichtung bereitzustellen.

Bezüglich des Verfahrens wird diese Aufgabe gelöst durch die Merkmale des Anspruchs 1.

Dazu wird mit einer Steuereinheit sowohl ein Kompressor, als auch eine Hohlkörperherstellungsmaschine in einer Hohlkörperherstellungseinheit gesteuert. Eine Hohlkörperherstellungsmaschine ist eine Plastikbehälter herstellende Maschine. Vorzugsweise handelt es sich um Maschinen zum Herstellen für PET-Behälter, insbesondere für PET-Flaschen, wobei die Maschine gemäß einer bevorzugten Weiterbildung der Erfindung eine Rundläuferstreckblasmaschine ist. Ein Geradläufer ist selbstverständlich auch denkbar.

Die Hohlkörperherstellungseinheit besteht vorzugsweise aus einem Kompressor, aus einer Streckblasmaschine sowie aus einer Steuereinheit, die sowohl mit der Streckblasmaschine als auch mit dem Kompressor verbunden ist. Es liegt auch im Bereich der Erfindung, dass mehrere Streckblasmaschinen mit einem Kompressor, mehrere Kompressoren mit einer Streckblasmaschine sowie mehrere Streckblasmaschinen mit mehreren Kompressoren verbunden sind. Alle diese Varianten haben die Gemeinsamkeit, dass sie von einer gemeinsamen zentralen Steuereinheit gesteuert und/oder geregelt werden.

Es spielt keine Rolle, wo sich die Steuereinheit befindet. Eine Unterbringung an bzw. in der Streckblasmaschine ist genauso möglich wie die Unterbringung an bzw. im Kompressor oder in einem eigenen Schaltschrank.

In einer Streckblasmaschine werden Vorformlinge in der Regel kurz vor der Verarbeitung aufgewärmt, um dann in eine Blasform eingeführt zu werden, in der sie mit unter Druck stehender Blasluft in einem ersten Schritt vor- und in einem zweiten Schritt fertiggeblasen werden. Gemäß einer bevorzugten Weiterbildung der Erfindung wird die Blasluft aus dem fertig geblasenen Behälter zum Kompressor zurückgeführt, wobei diese Rückführung auf verschiedene Arten erfolgen kann. Z.B. ist eine Einführung des rückgewonnenen Blasluftstroms vor dem Kompressor möglich, so dass er mit der vom Kompressor angesaugten Luft zusammengeführt werden kann. Eine Einführung der Blasluft nach dem Kompressor, so dass zwei komprimierte Luftströme miteinander kombiniert werden, ist auch denkbar. Wird ein mehrstufiger Kompressor verwendet, so ist es auch denkbar, den rückgeführten Luftstrom zwischen zwei Kompressorstufen einzuschleusen. Bei der Verwendung von Kompressoren ist es völlig irrelevant, welche Art verwendet wird. Hubkolbenkompressoren sind dabei genauso einsetzbar wie Schraubenverdichter, Roots-Gebläse, Kombinationen davon oder wie die Verwendung weiterer anderer Typen.

Auch die Rückführung der Blasluft in einen Zwischenspeicher und von dort aus zurück in den Kompressor ist möglich, um bestimmt ungewollte Druckschwankungen auszugleichen. Bei der Verwendung des Verfahrens ist es irrelevant, ob die gesamte Blasluft aus dem Blasprozess oder nur ein Teil rückgeführt wird.

Beispielsweisewird die Rückführung der Blasluft zum Kompressor von der Steuereinheit gesteuert. Diese erfolgt vorzugsweise in Abhängigkeit von der Betriebssituation der Streckblasmaschine. Dies bedeutet, dass die Steuereinheit z.B. je nach Druckniveau in den geblasenen Behältern verschieden lange Rückführzeiten vorgibt. Dies hat den Vorteil, dass die Steuereinheit dadurch den Mittelweg zwischen optimaler Luftrückführung und optimaler Prozesszeit beschreiten kann. Unter Betriebssituation ist auch die Menge der zur Verfügung stehenden Blasluft im fertig geblasenen Behälter zu verstehen. Dadurch ergibt sich z.B. die Konstellation, dass die Steuerung trotz der Vorgabe des Maschinenbedienpersonals, dass eine Rückführung der Blasluft zum Kompressor gewünscht wird, keine Rückführung durchgeführt wird, wenn z.B. das Volumen der fertig geblasenen Behälter unter einem bestimmten Schwellenwert liegt.

Erfindungsgemäß wird der Kompressor aber nicht direkt sondern indirekt gesteuert. Dazu werden über die Steuereinheit die Streckblasmaschine betreffende Parameter eingegeben, die dementsprechende, den Kompressor betreffende Programme oder Programmteile aufrufen. Solche Parameter, die indirekt die Steuerung des Kompressors vornehmen, sind der Vorblasdruck, der Fertigblasdruck, das Behältervolumen oder die Bereitschaft zur Luftrückführung zum Kompressor. D.h., dass z.B. durch die Eingabe eines Wertes für den Fertigblasdruck im Behälter in der Steuerung ein Programm aufgerufen wird, das dem Kompressor eine bestimmte bereitzustellende Soll-Leistung vorgibt. Es können beliebige Werte sein, die über die Steuereinheit an die Blasmaschine weitergegeben werden, und dadurch bestimmte Einstellungen bzw. Kriterien an den Kompressor weitergeben.

Beispielsweise wird die Ist-Leistung des Kompressors durch die Verarbeitung von Messwerten durch die Steuereinheit geregelt. Ein solcher Messwert kann z.B. der Druck in der Rückführleitung von einer Blasstation zum Kompressor sein. Dadurch kann die Leistung des Kompressors noch genauer an die wahren Leistungsverhältnisse der Streckblasmaschine angepasst werden. Durch eine gemeinsame Steuerung ist es also möglich, einen Blasmaschine und einen Kompressor (oder auch mehrere Blasmaschinen bzw. mehrere Kompressoren) und deren angeschlossene Einheiten optimal in der Weise aufeinander abzustimmen, dass der Blasmedien- bzw. der Energieverbrauch optimiert wird.

Vor allem bei Ausführungsformen mit mehreren Kompressoren bzw. mehreren Blasmaschinen ist es sinnvoll, die einzelnen Einheiten nicht mit der zentralen Steuereinheit zu verkabeln, sondern einen drahtlosen Datenaustausch aufzubauen. Eine solche drahtlose Kommunikation kann z. B. durch die Verwendung des bluetooth Standards, von Infrarot, von Mikrowellen oder anderen elektromagnetischen Wellen sein.

Es versteht sich von selbst, dass die Hohlkörperherstellungseinheit nicht nur aus einer Blasmaschine, einem Kompressor und einer Steuereinheit bestehen, sondern dass eine solche Einheit auch andere Komponenten wie Sensoren, Förderstrecken, Ventile und weitere enthalten kann.

Gemäß einer bevorzugten Weiterbildung der Erfindung ist die Steuereinheit eine Speicherprogrammierbare Steuerung (SPS).

Die Aufgabe bezüglich der Vorrichtung wird gelöst durch die Merkmale des Anspruchs 3. Dazu wird eine Steuerung zum Datenaustausch sowohl mit der Streckblasmaschine als auch mit dem Kompressor verbunden. Gemäß einer bevorzugten Weiterbildung der Erfindung erfolgt der Datenaustausch dabei bidirektional.

Beispielsweise weist die Hohlkörperherstellungsmaschine eine pneumatische Rückführleitung auf, die zum Kompressor führt. Für die Weiterbildungen/Ausführungsformen ist es irrelevant, ob die Rückführleitung direkt in den bzw. zwischen verschieden Stufen des Kompressors oder ob sie vor dem Kompressor, also in dessen Luftansaugbereich oder nach dem Kompressor, also in dessen Druckluftabgabebereich mündet.

Erfindungsgemäß handelt es sich bei der Hohlkörperherstellungsmaschine um eine Streckblasmaschine für Kunststoffflaschen, insbesondere für PET-Flaschen, wobei eine Streckblasmaschine umlaufender Bauart bevorzugt Verwendung findet.

Weiterhin besteht die Erfindung darin, dass sich die zentrale Steuereinheit in der Blasmaschine befindet, wobei eine Unterbringung im Kompressor ebenfalls denkbar ist. Die Steuereinheit besitzt ein Eingabegerät, über das Parameter eingegeben und Einstellungen vorgenommen werden können. Das Eingabegerät ist gemäß einer weiteren Weiterbildung der Erfindung ein Touch-Screen. Andere Eingabegeräte, wie Schalter, Taster oder anderweitige Tastaturen sind auch möglich.

Eine weitere bevorzugte Weiterbildung der Erfindung besteht darin, dass sich die Steuereinheit in der Blasmaschine und das Eingabegerät an der Blasmaschine befindet. Eine Unterbringung der Steuereinheit in einem eigenen Schaltschrank oder die Unterbringung im Kompressor ist alternativ auch möglich.

Der bzw. die Kompressoren, die Steuereinheit sowie die eine bzw. die mehreren Blasmaschinen sind vorzugsweise mit Modulen zum drahtlosen Datenaustausch ausgestattet, wobei die Module z.B. bluetooth, Infrarot, Mikrowellen oder andere elektromagnetische Sende- bzw. Empfangseinheiten sein können.

Eine konkrete Ausgestaltung der Erfindung soll anhand der Figuren näher erläutert werden. Es zeigt:

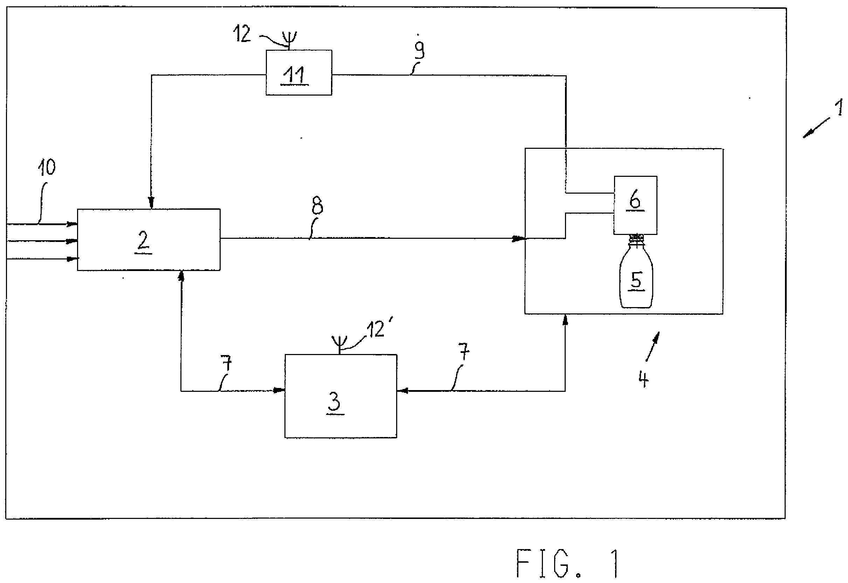

- Figur 1: eine schematische Darstellung einer Einheit mit Blasmaschine, Kompressor und Steuereinheit.

Figur 1 zeigt einen Kompressor 2, der über eine Luftzufuhr 8 und eine Luftrückführung 9 mit einer Blasmaschine 4 gekoppelt ist. Der Kompressor 2 besitzt eine Luftansaugung 10 über die gefilterte Frischluft angesaugt und verdichtet wird. Die komprimierte Luft wird über die Luftzufuhr 8 der Blasmaschine 4 zugeführt, wobei die Zufuhr über einen hier nicht gezeigten Ringkanal und eine Blasdüse 6 zum Behälter 5 erfolgt. Dieser wird durch mindestens zwei Blasphasen, nämlich eine Vorblasphase und eine Hauptblasphase von einem Rohling zum fertigen Behälter 5 aufgeblasen. Ist der Behälter 5 fertig geblasen, so kann die Blasluft aus dem Behälter über die Blasdüse 6 und der Luftrückführung 9 dem Kompressor 2 erneut zugeführt werden.

Die Steuerung der genannten Vorgänge übernimmt eine Steuereinheit 3, die über eine bidirektionale Signalübertragung 7 mit der Blasmaschine 4 sowie dem Kompressor 2 verbunden ist. Dadurch können über die Steuereinheit 3 alle Funktionen der angeschlossenen Maschinen abgerufen, überprüft und verändert werden.

Die Luftrückführung 9 ist mit einem Drucksensor 11 ausgestattet, der die Druckverhältnisse der zurückzuführenden Blasluft aus dem Behälter 5 überwacht. Diese Daten werden über eine Sende-/Empfangseinheit 12 vom Drucksensor 11 an die Sende-/Empfangseinheit 12'der Steuereinheit 3 drahtlos gesendet. Mit Hilfe dieses und anderer Ergebnisse kann die Steuereinheit 3 den Kompressor 2 optimal regeln, um den Energieverbrauch der gesamten Hohlkörperherstellungseinheit 1 zu optimieren bzw. reduzieren. Eine Möglichkeit der Steuerung und Regelung des Kompressors 2 ist die der Leistungssteuerung und Leistungsregelung.

## Patentansprüche

1. Verfahren zur Steuerung und Regelung einer Hohlkörperherstellungseinheit (1), aufweisend mindestens einen Kompressor (2), mindestens eine Streckblasmaschine (4) für Kunststoffflaschen und eine Steuereinheit (3), wobei mit der Steuereinheit (3) sowohl der Kompressor (2) als auch die Streckblasmaschine (4) gesteuert werden können und die Steuerung des Kompressors (2) durch die Eingabe von Parametern bezüglich der Streckblasmaschine (4) in die Steuereinheit (3) und durch den daraus resultierenden Aufruf von diesen Parametern zugeordneten Programmen bzw. Programmteilen bezüglich Einstellungen des Kompressors (2) durchgeführt wird, **dadurch gekennzeichnet, dass** eine bereitzustellende Soll-Leistung des Kompressors (2) durch die Eingabe von Parametern in die Steuereinheit (3) betreffend die Streckblasmaschine (4) vorgegeben wird, wobei als Parameter verwendet werden der Vorblasdruck oder der Fertigblasdruck oder das Hohlkörpervolumen oder die Bereitschaft zur Luftrückführung zum Kompressor.

2. Verfahren nach Anspruch 1, wobei die Ist-Leistung des Kompressors (2) durch die Verarbeitung von Messwerten durch die Steuereinheit geregelt wird.

3. Vorrichtung zum Herstellen von Hohlkörpern (5) bestehend aus zumindest einem Kompressor (2), zumindest einer Streckblasmaschine (4) für Kunststoffflaschen (5) und einer Steuereinheit (3), wobei die Steuereinheit (3) zum Datenaustausch sowohl mit der Streckblasmaschine als auch mit dem Kompressor (2) verbunden ist und sich die Steuereinheit(3) in der Streckblasmaschine (4) oder im Kompressor (2) befindet, **dadurch gekennzeichnet, dass** die Steuereinheit (3) ausgebildet ist, die Soll-Leistung des Kompressors (2) durch die Eingabe von Parametern in die Steuereinheit (3) betreffend die Streckblasmaschine (4) vorzugegeben, wobei als Parameter der Vorblasdruck oder der Fertigblasdruck oder das Hohlkörpervolumen oder die Bereitschaft zur Luftrückführung zum Kompressor verwendet werden können.

4. Vorrichtung nach Anspruch 3, wobei die Streckblasmaschine (4) eine Streckblasmaschine (4) für PET-Flaschen (5) ist.

5. Vorrichtung nach Anspruch 3, wobei die Streckblasmaschine (4) eine Maschine umlaufender Bauart ist.

6. Vorrichtung nach wenigstens einem der Ansprüche 3 bis 5, wobei die Steuereinheit (3) über ein Eingabegerät verfügt, über das Parameter eingebbar und Einstellungen vornehmbar sind.

7. Vorrichtung nach Anspruch 6, wobei das Eingabegerät ein Touch-Screen ist.

8. Vorrichtung nach wenigstens einem der Ansprüche 3 bis 7, wobei sich die Steuereinheit (3) in der Streckblasmaschine (4) und die Eingabeeinheit an der Streckblasmaschine (4) befindet.

## Claims

1. Method for controlling and regulating a hollow body manufacturing unit (1) having at least one compressor (2), at least one stretch blow moulding machine (4) for plastics bottles, and a control unit (3), it being possible for both the compressor (2) and the stretch blow moulding machine (4) to be controlled by the control unit (3), and the control of the compressor (2) being implemented by the input of parameters relating to the stretch blow moulding machine (4) into the control unit (3) and by the resulting retrieval of programs or program parts associated with these parameters with regard to settings of the compressor (2), **characterised in that** a target output of the compressor (2) to be provided is specified by inputting parameters relating to the stretch blow moulding machine (4) into the control unit (3), the pre-blow pressure or the final-blow or the hollow body volume or readiness for air recirculation to the compressor being used as parameters.

2. Method according to claim 1, wherein the actual output of the compressor (2) is regulated by the processing of measured values by the control unit.

3. Device for manufacturing hollow bodies (5), consisting of at least one compressor (2), at least one stretch blow moulding machine (4) for plastics bottles (5), and a control unit (3), the control unit (3) being connected both to the compressor (2) and to the stretch blow moulding machine for data exchange and the control unit (3) being located in the stretch blow moulding machine (4) or in the compressor (2), **characterised in that** the control unit (3) is designed to specify the target output of the compressor (2) by inputting parameters relating to the stretch blow moulding machine (4) into the control unit (3), it being possible for the pre-blow pressure or the final-blow or the hollow body volume or readiness for air recirculation to the compressor to be used as parameters.

4. Device according to claim 3, wherein the stretch blow moulding machine (4) is a stretch blow moulding machine (4) for PET bottles (5).

5. Device according to claim 3, wherein the stretch blow moulding machine (4) is a rotary-type machine.

6. Device according to at least one of claims 3 to 5, wherein the control unit (3) has an input apparatus via which parameters can be input and settings can be made.

7. Device according to claim 6, wherein the input apparatus is a touch screen.

8. Device according to at least one of claims 3 to 7, wherein the control unit (3) is located in the stretch blow moulding machine (4) and the input unit is located on the stretch blow moulding machine (4).

## Revendications

1. Procédé de commande et de régulation d'une unité de fabrication de corps creux (1), présentant au moins un compresseur (2), au moins une machine de soufflage avec étirage (4) destinée à des bouteilles en plastique et une unité de commande (3), dans lequel tant le compresseur (2) que la machine de soufflage avec étirage (4) peuvent être commandés par l'unité de commande (3), et dans lequel la commande du compresseur (2) est mise en oeuvre grâce à l'entrée de paramètres concernant la machine de soufflage avec étirage (4) dans l'unité de commande (3) et grâce à l'appel, résultant de ladite entrée, de programmes ou de parties de programme associé(e)s auxdits paramètres et gérant des ajustements du compresseur (2), **caractérisé en ce qu'**une puissance de consigne à fournir du compresseur (2) est prédéfinie grâce à l'entrée de paramètres concernant la machine de soufflage avec étirage (4) dans l'unité de commande (3), dans lequel la pression de pré-soufflage ou la pression de soufflage final ou le volume de corps creux ou la réserve de recyclage d'air vers le compresseur est/sont utilisé(s) comme paramètres.

2. Procédé selon la revendication 1, dans lequel la puissance réelle du compresseur (2) est régulée grâce au traitement de valeurs de mesure par l'unité de commande.

3. Dispositif permettant de fabriquer des corps creux (5), constitué d'au moins un compresseur (2), d'au moins une machine de soufflage avec étirage (4) destinée à des bouteilles en plastique (5) et d'une unité de commande (3), dans lequel l'unité de commande (3) est reliée à la fois à la machine de soufflage avec étirage et au compresseur (2) en vue d'un échange de données et l'unité de commande(3) se trouve dans la machine de soufflage avec étirage (4) ou dans le compresseur (2), **caractérisé en ce que** l'unité de commande (3) est conçue pour prédéfinir la puissance de consigne du compresseur (2) grâce à l'entrée de paramètres concernant la machine de soufflage avec étirage (4) dans l'unité de commande (3), dans lequel la pression de pré-soufflage ou la pression de soufflage final ou le volume de corps creux ou la réserve de recyclage d'air vers le compresseur peuvent être utilisés comme paramètres.

4. Dispositif selon la revendication 3, dans lequel la machine de soufflage avec étirage (4) est une machine de soufflage avec étirage (4) destinée à des bouteilles en PET (5).

5. Dispositif selon la revendication 3, dans lequel la machine de soufflage avec étirage (4) est une machine de type carrousel.

6. Dispositif selon au moins l'une quelconque des revendications 3 à 5, dans lequel l'unité de commande (3) dispose d'un appareil d'entrée par l'intermédiaire duquel des paramètres peuvent être saisis et des ajustements peuvent être mis en œuvre.

7. Dispositif selon la revendication 6, dans lequel l'appareil d'entrée est un écran tactile.

8. Dispositif selon au moins l'une quelconque des revendications 3 à 7, dans lequel l'unité de commande (3) se trouve dans la machine de soufflage avec étirage (4) et l'unité d'entrée se trouve sur la machine de soufflage avec étirage (4).
